(19) **Europäisches Patentamt**

**European Patent Office**

**Office européen des brevets**

(11) **EP 1 028 553 A1**

(12) **EUROPEAN PATENT APPLICATION**
published in accordance with Art. 158(3) EPC

(43) Date of publication:
**16.08.2000 Bulletin 2000/33**

(51) Int. Cl.⁷: **H04J 13/04**

(21) Application number: **99938533.9**

(86) International application number:
**PCT/JP99/04465**

(22) Date of filing: **20.08.1999**

(87) International publication number:
**WO 00/13360 (09.03.2000 Gazette 2000/10)**

(84) Designated Contracting States:
**AT BE CH CY DE DK ES FI FR GB GR IE IT LI LU MC NL PT SE**

(30) Priority: **28.08.1998 JP 24416398**
**13.11.1998 JP 32411298**

(71) Applicant:
**MATSUSHITA ELECTRIC INDUSTRIAL CO., LTD.**
**Kadoma-shi, Osaka 571-8501 (JP)**

(72) Inventors:
• **HIRAMATSU, Katsuhiko**
**Yokosuka-shi, Kanagawa 239-0831 (JP)**
• **UE, Toyoki**
**Yokosuka-shi, Kanagawa 239-0847 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **COMMUNICATION DEVICE AND METHOD OF PEAK POWER CONTROL**

(57)     Modulation circuits 101 to 104 modulate transmission signals of four users (using basic slots with pilot symbols cyclically inserted into transmission data) or a control signal including a pilot signal and transmission signals of three users (using basic slots with pilot symbols not inserted into transmission data). Phase rotation circuits 105 to 108 rotate phases of output signals from modulation circuits 101 to 104 according to the total number of users. Addition circuit I109 adds up the in-phase channels of the output signals from phase rotation circuits 105 to 108 and addition circuit Q110 adds up the quadrature-phase channels of the output signals from phase rotation circuits 105 to 108. Radio section 115 modulates the output signals from addition circuit I109 and addition circuit Q110 to radio frequencies and then amplifies these signals.

FIG. 1

## Description

Technical Field

The present invention relates to a communication apparatus that transmits signals to a plurality of users simultaneously and its peak power suppression method.

Background Art

In recent years, radio communication systems such as car telephones and cellular telephones, which are rapidly spreading, use a multiple access system in which a plurality of stations carry out communications using a same frequency band simultaneously.

A flow of a signal sent from a conventional communication apparatus used in a radio communication system is explained with reference to the attached drawings below.

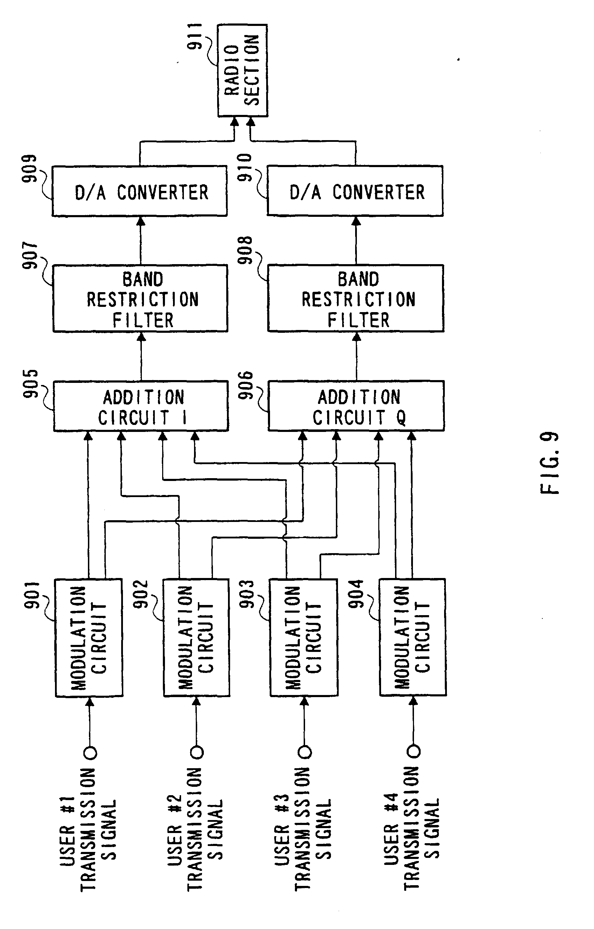

FIG.9 is a block diagram showing a configuration of a conventional communication apparatus. In FIG.9, transmission signals of users 1 to 4 are sent to their respective modulation circuits 901 to 904 for primary and secondary modulations and then separated into an in-phase channel (I-ch) and quadrature-phase channel (Q-ch).

Then, the in-phase channel and quadrature-phase channel of each signal is sent to addition circuit I905 and addition circuit Q906, respectively and added up for every channel. The signals output from addition circuit I905 and addition circuit Q906 are sent to band restriction filters 907 and 908 and subjected to band restriction.

The signals output from band restriction filters 907 and 908 are sent to D/A converters 909 and 910, respectively and converted to analog signals. The signals output from D/A converters 909 and 910 are sent to radio section 911 and modulated to radio frequencies.

In this way, the conventional communication apparatus modulates signals for a plurality of users, adds up these signals, converts the added signals to analog signals and then amplifies their power.

However, since the conventional communication apparatus adds up a plurality of signals which have a same phase, peak power becomes considerably high compared to average power. Therefore, the conventional communication apparatus needs to use a large amplifier with a high heating value to suppress distortion at a peak time.

Moreover, the "digital system MCA system standard RCR STD-32" discloses a method of suppressing peak power with fixed symbols by rotating the phases of fixed symbols and placing them at positions different from the position of normal data, but even this method cannot suppress peak power in a data segment.

Disclosure of Invention

It is an objective of the present invention to provide a communication apparatus and peak power suppression method to suppress peak power of a combined value of signals transmitted to a plurality of communication destinations.

This objective is achieved by phase-modulating the phases of signals transmitted to a plurality of communication destinations, rotating the phase of each phase-modulated signal by an amount of rotation differing from one communication destination to another and further combining phase-rotated signals.

Brief Description of Drawings

FIG.1 is a block diagram showing a configuration of a communication apparatus (base station) according to Embodiment 1 of the present invention;

FIG.2 is a block diagram showing a configuration of a communication apparatus (mobile station) according to Embodiment 1 of the present invention;

FIG.3A, 3B, 3C and 3D are layouts of signal points of each user placed on an IQ axis plane of the communication apparatus (base station) according to Embodiment 1 of the present invention;

FIG.4 is a layout of signal points of all users placed on an IQ axis plane of the communication apparatus (base station) according to Embodiment 1 of the present invention;

FIG.5 is a block diagram showing a configuration of a communication apparatus (base station) according to Embodiment 3 of the present invention;

FIG.6 is a block diagram showing a configuration of a communication apparatus (base station) according to Embodiment 4 of the present invention;

FIG.7 is a block diagram showing a configuration of a communication apparatus (mobile station) according to Embodiment 4 of the present invention;

FIG.8 is a block diagram showing a configuration of a communication apparatus (mobile station) according to Embodiment 5 of the present invention; and

FIG.9 is a block diagram showing a configuration of a conventional communication apparatus.

Best Mode for Carrying out the Invention

With reference now to the attached drawings, the best modes for carrying out the present invention are explained in detail below. In the following explanations, a phase modulation system, or more specifically, QPSK modulation system is used as a modulation system.

(Embodiment 1)

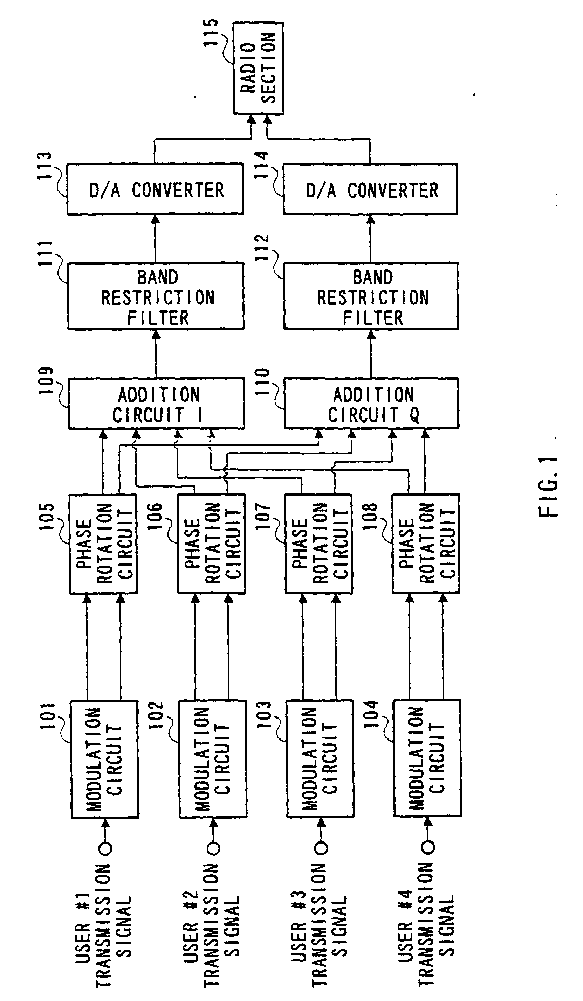

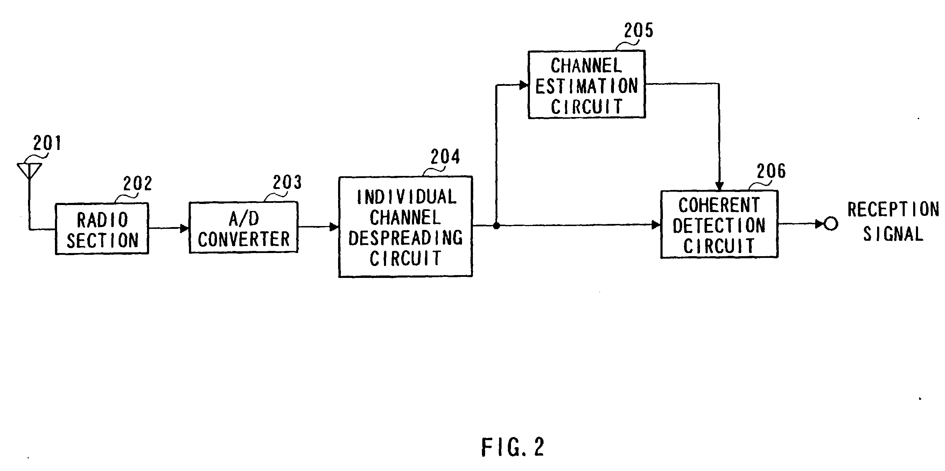

FIG.1 is a block diagram showing a configuration of a communication apparatus (base station) according to Embodiment 1 of the present invention. FIG.2 is a block diagram showing a configuration of a communication apparatus (mobile station) according to Embodiment 1. In the present embodiment, each user signal is communicated using basic slots with known symbols (pilot symbols) inserted into a transmission data symbol at established intervals.

In FIG.1, transmission signals of users 1 to 4 are sent to modulation circuits 101 to 104, respectively. The transmission signals are subjected to primary modulation and secondary modulation by modulation circuits 101 to 104 and further separated into an in-phase channel (I-ch) and quadrature-phase channel (Q-ch).

The signals output from modulation circuits 101 to 104 are subjected to phase rotation by phase rotation circuits 105 to 108. The in-phase channels and quadrature-phase channels of the signals output from phase rotation circuits 105 to 108 are sent to addition circuit I109 and addition circuit Q110, respectively and added up for every channel.

The signals output from addition circuit I109 and addition circuit Q110 are output to band restriction filters 111 and 112 and subjected to band restriction, respectively.

The signals output from band restriction filters 111 and 112 are output to D/A converters 113 and 114 and converted to analog signals, respectively.

The signals output from D/A converters 113 and 114 are output to radio section 115, respectively and modulated into a radio frequency. The signal modulated by radio section 115 is transmitted to the mobile station via an antenna, which is not shown in the figure.

On the other hand, the signal transmitted by the communication apparatus (base station) according to Embodiment 1 shown in FIG.1 is received by another communication apparatus (mobile station) according to Embodiment 1 shown in FIG.2. That is, the signal transmitted by the communication apparatus (base station) shown in FIG.1 is received by the communication apparatus (mobile station) shown in FIG.2 via antenna 201.

The signal received by antenna 201 is output to radio section 202, subjected to amplification, frequency conversion, quasi-coherent detection, and conversion to a baseband signal. This baseband signal is sent to A/D converter 203.

In A/D converter 203, the baseband signal sent from radio section 202 is converted to a digital baseband signal and then sent to individual channel despreading circuit 204.

In individual channel despreading circuit 204, the digital baseband signal sent from A/D converter 203 is despread and output to channel estimation circuits 205 and 206.

In channel estimation circuit 205, the signal sent from individual channel despreading circuit 204 is subjected to channel estimation using pilot symbols inserted in this signal. The channel estimation result (channel estimated value) is sent to coherent detection circuit 206.

In coherent detection circuit 206, the signal sent from individual channel despreading circuit 204 is corrected with a channel estimated value sent from channel estimation circuit 205 and subjected to coherent detection, and in this way the reception signal is obtained.

Then, the operations of the components of the communication apparatus (base station) shown in FIG.1 and the communication apparatus (mobile station) shown in FIG.2 are explained.

First, in the communication apparatus (base station) shown in FIG.1, modulation circuit 101 carries out mapping by performing primary modulation on the signal to be transmitted to user 1. Modulation circuit 101 further carries out secondary modulation on the signal subjected to primary modulation, separates the signal into an in-phase channel and quadrature-phase channel and outputs them to phase rotation circuit 105. Modulation circuits 102 to 104 perform the same processing as described above on the transmission signals of users 2 to 4.

Phase rotation circuits 105 to 108 rotate the phases of the transmission signals which are modulated of users 1 to 4, respectively. At this time, phase angle $\theta_n$ to be rotated is determined according to total number of users N, user number n to identify the user of the transmission signal and the phase between neighboring signal points on the signal mapping during the above modulation (hereinafter referred to as "neighboring phase").

More specifically, a neighboring phase is divided by total number of users N (hereinafter referred to as "increment in an amount of phase change") and (user number n - 1) is multiplied by the increment in an amount of phase change to calculate phase rotation angle $\theta_n$ of the modulated signal of the nth user.

Phase rotation circuits 105 to 108 perform the calculations above on all signals and then rotate the phase of the modulated signal of the nth user by $\theta_n$.

For example, in the case of a QPSK modulation system, the neighboring phase is $\pi/2$ (rad), and therefore $\theta_n$ is expressed in expression (1) below.

$$\theta_n = \frac{(n\text{-}1)\pi}{2N} \tag{1}$$

Here, if 4 is assigned to total number of users N, then $\theta_1 = 0$ (rad), $\theta_2 = \pi/8$ (rad), $\theta_3 = \pi/4$ (rad) and $\theta_4 = 3\pi/8$ (rad). That is, phase rotation circuit 105 rotates the phase of the signal of user 1 by 0 degrees, phase rotation circuit 106 rotates the phase of the signal of user 2 by 22.5 degrees, phase rotation circuit 107 rotates the phase of the signal of user 3 by 45 degrees, and phase rotation circuit 108 rotates the phase of the signal of user 4 by 67.5 degrees.

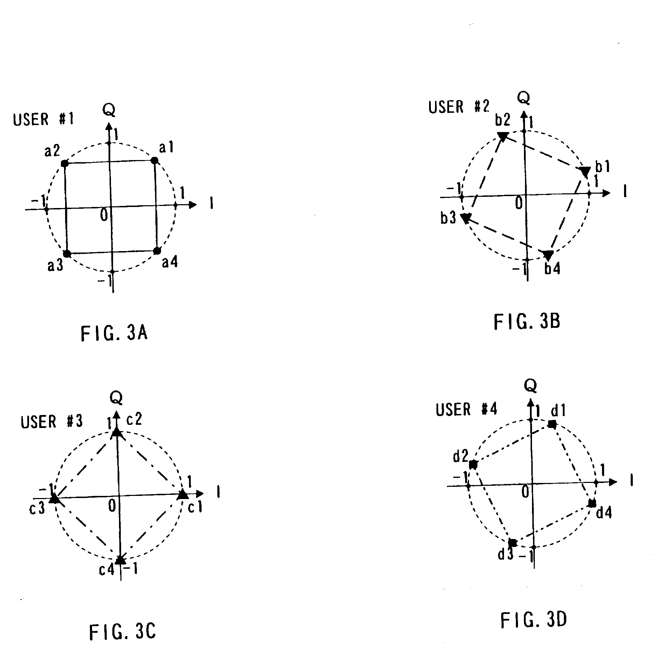

FIG.3 shows a state of the phase-rotated signal points of users 1 to 4 located on an IQ axis plane. FIG.3A shows the locations of the signal points of user 1, which is a state without phase rotation. The signal points of users 2 to 4 are located at positions where the phases of the signal points of user 1 are rotated by 22.5 degrees, 45 degrees and 67.5 degrees clockwise around the origin, respectively. FIG.3B, 3C and 3D show the locations of the signal points of user 2, user 3 and user 4.

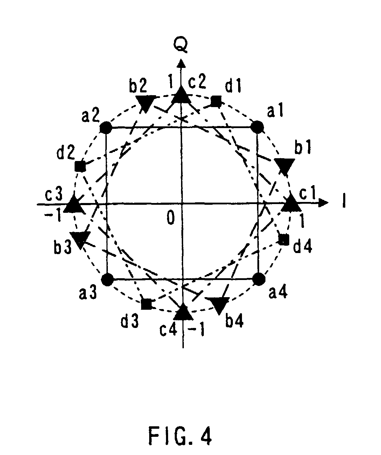

FIG.4 shows a state when the signal points of all users are superimposed on an IQ axis plane. As shown in FIG.4, the signal points are spaced uniformly.

After the above phase rotation processing is completed, phase rotation circuits 105 to 108 output the in-phase channels and quadrature-phase channels of users 1 to 4 to addition circuit I109 and addition circuit Q110, respectively.

Addition circuit I109 and addition circuit Q110 add up the phase-rotated signals of users 1 to 4 for the in-phase channels and quadrature-phase channels separately and output the added in-phase channels and quadrature-phase channels to band restriction filters 111 and 112, respectively.

Band restriction filters 111 and 112 perform band restriction on the signals output from addition circuit I109 and addition circuit Q110 and output these band-restricted signals to D/A converters 113 and 114.

D/A converters 113 and 114 convert the signals output from band restriction filters 111 and 112 to analog signals and output these signals to radio section 115.

Radio section 115 modulates the signals output from D/A converters 113 and 114 to a radio frequency, amplifies the radio frequency signal by a built-in transmission amplifier and then send the signal to the mobile station via an antenna, which is not shown in the figure.

On the other hand, in the communication apparatus (mobile station) shown in FIG.2, radio section 202 performs amplification, frequency conversion and quasi-coherent detection on the signal received via antenna 201 and sends the signal to A/D converter 203.

A/D converter 203 converts the signal sent from radio section 202 to a digital baseband signal and sends the converted signal to individual channel despreading circuit 204.

Individual channel despreading circuit 204 despreads the digital baseband signal sent from A/D converter 203 and sends the resulting signal to channel estimation circuit 205 and coherent detection circuit 206.

Channel estimation circuit 205 carries out channel estimation with reference to pilot symbols in the signal sent from individual channel despreading circuit 204 and sends the channel estimated value to coherent detection circuit 206.

Coherent detection circuit 206 corrects the signal sent from individual channel despreading circuit 204 with the channel estimated value sent from cannel estimation circuit 205, then performs coherent detection processing on the signal and extracts the reception signal. These are the operations of the components of the communication apparatuses shown in FIG.1 and FIG.2.

Then, a comparison is made between the conventional communication apparatus and the communication apparatus of Embodiment 1 with respect to the ratio of peak power to average power. Suppose transmission power is 1 in the following calculations. Transmission power is expressed by the distance between the origin and the location of each signal point in FIG.3.

In the conventional communication apparatus, the signal points of all users are located as shown in FIG.3A and the power reaches a peak when the signals of all users are located at a1 in FIG.3A. At the peak, the voltages of the in-phase channels and quadrature-phase channels of all users become 0.707 and the peak power, which is a sum total of the square of a sum of the in-phase channels and the square of a sum of the quadrature-phase channels, becomes 16.000. Then, power is calculated for all combinations using the same method and average power calculated here is 4.000. Therefore, the ratio of peak power to average power in the conventional communication apparatus is 4.000.

On the other hand, in the communication apparatus of Embodiment 1, a peak is reached when the signal point of user 1 is located at a1 in FIG.3A; signal point of user 2 at b1 in FIG.3B, signal point of user 3 at c1 in FIG.3C; and signal point of user 4 at d1 in FIG.3D, etc. At a peak, the voltages of the in-phase channel and quadrature-phase channel of user 1 become 0.707 and 0.707, respectively; the voltages of the in-phase channel and quadrature-phase channel of user 2 become 0.924 and 0.383, respectively; the voltages of the in-phase channel and quadrature-phase channel of user 3 become 1.000 and 0.000, respectively; and the voltages of the in-phase channel and quadrature-phase channel of user 4 become 0.383 and 0.924, respectively. Thus, peak power, which is a sum total of the square of a sum of the in-phase channels and the square of a sum of the quadrature-phase channels is 13.137. Since the average power is 4.000, the ratio of peak power to average power of the communication apparatus of Embodiment 1 is 3.284.

Thus, using the communication apparatus of Embodiment 1 will reduce peak power by approximately 18% compared to the conventional communication apparatus.

Thus, according to the present embodiment, when transmitting signals of a plurality of users simultaneously, since rotating the phases of signal points of the modulated signals can suppress a dynamic range during an amplification operation of the transmission amplifier provided in radio section 115, it is also possible to suppress heat generated at this time. This makes it possible to use a lower cost and smaller transmission amplifier than that of the conventional communication apparatus.

Furthermore, according to the communication apparatus of the present embodiment, the phase of each signal point after phase modulation is rotated according to the number of user signals transmitted, which allows the number of user signals transmitted to be flexibly increased/decreased according to the application without changing the main body of the apparatus.

Moreover, according to the present embodiment, the communication apparatus (base station) rotates the phases of signal points of user transmission signals, and the communication apparatus (mobile station) carries out coherent detection with reference to pilot symbols inserted into the reception signal, and therefore it is possible to extract the reception signal without any trouble.

(Embodiment 2)

In Embodiment 2, the phase rotation angle can be determined independently of the total number of users by presetting the number of phase rotation candidates. Since the configuration of the communication apparatus (base station) in Embodiment 2 is the same as the configuration shown in FIG.1, its explanations are omitted.

In Embodiment 2, phase rotation angle $\theta_n$ of the signal of the nth user is calculated beforehand supposing the identification number of the nth user is $ID_n$; the number of phase rotation candidates is M; and the phase difference from the adjacent symbol is $\delta$, according to the following expression. Here, "%" in expression (2) is a modulo operation.

$$\theta_n = \frac{((ID_n\text{-}1)\%M)\delta}{M} \qquad (2)$$

Then, calculated phase rotation angle $\theta_n$ is stored in each phase rotation circuit. The phase rotation circuit rotates the phase of the signal input by stored phase rotation angle $\theta_n$.

As described above, since phase rotation angle $\theta_n$ can be stored in ROM by calculating $\theta_n$ with the number of phase rotation candidates set beforehand, it is possible to reduce the amount of operations to calculate the phase rotation angle in the phase rotation circuit and reduce the size of the circuit.

Furthermore, in order to sufficiently randomize phase rotation angle $\theta_n$ it is also possible to calculate phase rotation angle $\theta_n$ of the signal of the nth user beforehand using user identification number $ID_n$ as a random number generation key according to the following expression. Here, "rand()" in expression (3) is a random number generation module.

$$\theta_n = \frac{(\text{rand}((ID_n\text{-}1)\%M))\delta}{M} \qquad (3)$$

As shown above, randomizing allows further suppression of peak power.

(Embodiment 3)

In Embodiment 3, an amount of phase rotation can be assigned to the signal of the new user based on the past transmission signal in such a way as to minimize the transmission power peak, when a new user is added. Here, by way of example, a case where user 4 is added while the signals of users 1 to 3 are being transmitted is explained.

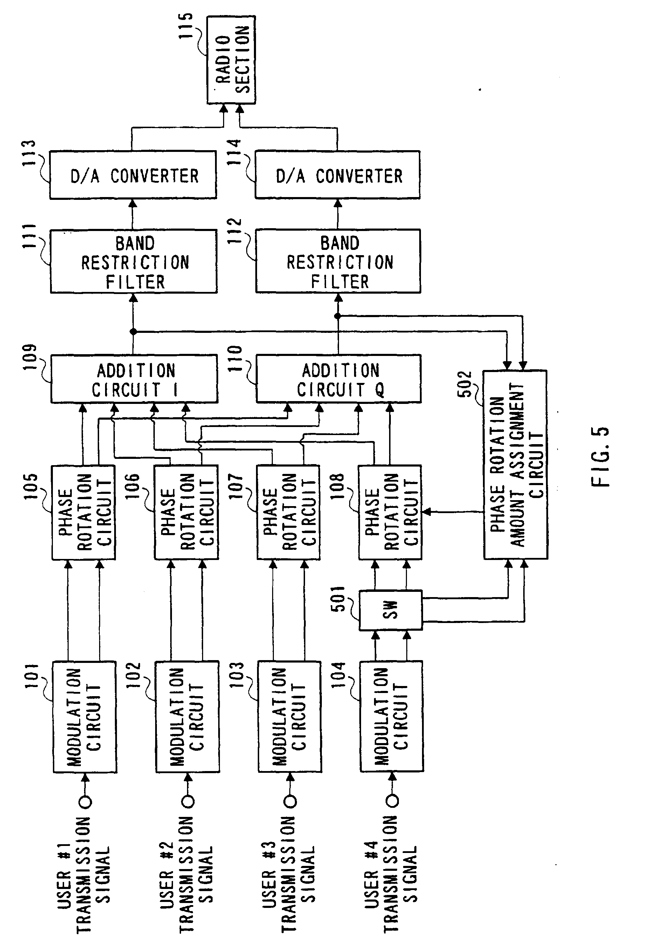

FIG.5 is a block diagram showing a configuration of the communication apparatus (base station) according to Embodiment 3. The parts in the communication apparatus shown in FIG.5 that are common to those in the communication apparatus shown in FIG.1 are assigned the same codes and their explanations are omitted.

The communication apparatus shown in FIG.5 has a configuration with switch 501 and phase rotation amount assignment circuit 502 added to the communication apparatus shown in FIG.1.

Modulation circuit 104 modulates the transmission signal of newly added user 4 and sends this signal to switch 501. Switch 501 sends the signal output from modulation circuit 104 to phase rotation amount assignment circuit 502.

Phase rotation amount assignment circuit 502 inputs the output signal of modulation circuit 104 sent from switch 501 and the combination result of users 1 to 3 of the previous slot, that is, the output signals of addition circuit I109 and addition circuit Q110. Then, phase rotation amount assignment circuit 502 calculates the amount of phase rotation θ to be assigned to user 4 in such a way that power consumption of the transmission amplifier in radio section 115 is reduced to a minimum based on the above signal.

More specifically, phase rotation amount assignment circuit 502 calculates the amount of phase rotation θ to be assigned to user 4 as follows:

First, power consumption is calculated for all candidates M (0 to M-1) of the amount of phase rotation and then phase rotation amount number m corresponding to minimum power is calculated according to expression (4).

$$m = \min_{m=0}^{M-1} \left\{ \sum_{l=0}^{L-1} \left| v_{k-1}(l) + s(l)\exp\left( j\frac{m\delta}{M} \right) \right|^2 \right\} \qquad (4)$$

In expression (4), a sum of the first symbol of combined signal $V_{k-1}$ of slot (k-1) and a value obtained by multiplying first signal s(1) of the newly added user by an amount of phase rotation exp (jmδ/M) is calculated for all symbols L (0 to L-1), and the total sum of this, that is, power, is calculated for all phase rotation amount candidates M (0 to M-1). Furthermore, of the power calculated in this way, phase rotation amount number m corresponding to the minimum power is calculated.

After this, phase rotation amount number m calculated in expression (4) is substituted into expression (5) below and the amount of phase rotation θ to be assigned to user 4 is calculated.

$$\theta_n = \exp\left( j\frac{m\delta}{M} \right) \qquad (5)$$

where, δ is a phase difference from the adjacent symbol according to a phase modulation system.

After carrying out the above described calculations, phase rotation amount assignment circuit 502 sends the amount of phase rotation to phase rotation circuit 108. Phase rotation circuit 108 rotates the phase of the output signal of modulation circuit 104 sent via switch 501 by the amount of phase rotation output from phase rotation amount assignment circuit 502. The operations hereafter are the same as those of the communication apparatus in Embodiment 1, and therefore their explanations are omitted.

As described above, calculating the phase rotation angle of the signal of the new user in such a way that the power consumption of the transmission amplifier in radio section 115 is reduced to a minimum based on the past transmission signal makes it also possible to suppress the ratio of peak power to average power when a new user is added.

In addition, Embodiment 3 describes the case where a new user is added while signals of 3 users are being transmitted, but the present invention is not limited to this, nor is limited the number of users transmitted before the new user is added.

Moreover, the embodiment above explains the case where the number of users is 4, but the present invention imposes no restrictions on the number of users.

Moreover, the embodiment above uses a QPSK modulation system as the modulation system, but the present invention is not limited to this; the same effect can be obtained using another phase modulation system such as a BPSK modulation system, π/4 shift QPSK modulation system and 16-value QAM modulation system.

(Embodiment 4)

In Embodiments 1 to 3 above, the transmitting side performs communications using basic slots in which pilot symbols are inserted into transmission data. Therefore, since there is no phase difference between the transmission data and pilot symbols, the receiving side can perform coherent detection on the transmission data using the channel estimation results of the pilot symbols.

On the other hand, in Embodiments 4 and 5 that will be described later, the transmitting side uses a method of carrying out communications of the transmission data and pilot signal using different channels instead of the communication method of inserting the pilot signal into the user transmission signal. In this case, since there is a phase difference between the transmission data and pilot signal, the receiving side needs to correct this phase difference to perform coherent detection of the transmission data. The method of correcting this phase difference will be explained in Embodiment 4 and Embodiment 5 that will be described later.

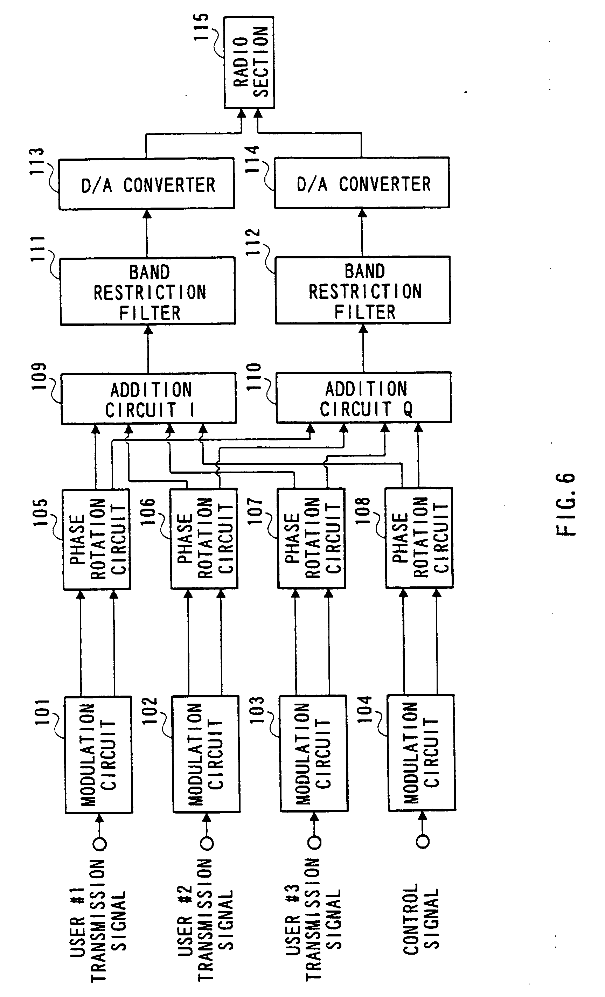

In Embodiment 4, the transmitting side notifies the receiving side of the amount of phase rotation (phase difference between the transmission data and pilot signal). FIG.6 is a block diagram showing a configuration of the communication apparatus (base station) according to Embodiment 4. Here, a case where the total number of users is 3 will be explained below, but there is no restriction on the total number of users.

First, in the communication apparatus (base station) of the present embodiment, the transmission signals of users 1 to 3 are sent to modulation circuits 101 to 103. A control signal including a pilot signal is sent to modulation circuit 104.

The transmission signals of users 1 to 3 are subjected to primary modulation and secondary modulation by modulation circuits 101 to 104, respectively and then separated into in-phase channels and quadrature-phase channels. The in-phase channel and quadrature-phase channel of each signal modulated by modulation circuits 101 to 104 are subjected to phase rotation by phase rotation circuits 105 to 108. Here, each amount of phase rotation by phase rotation circuits 105 to 108 is calculated from expression (1) above by regarding the control signal as a user under a condition that the total number of users is 4.

The in-phase channels of the signals whose phase has been rotated by phase rotation circuits 105 to 108 are sent to addition circuit I109 and added up for every channel, and the quadrature-phase channels of the signals are sent to addition circuit Q110 and added up.

The signals added up by addition circuit I109 and addition circuit Q110 are subjected to band restriction by band restriction filters 111 and 112, respectively, converted to analog signals by D/A converters 113 and 114 and modulated into a radio frequency by radio section 115.

The signal modulated into a radio frequency by radio section 115 is amplified by a transmission amplifier, which is not shown in the figure, attached to radio section 115 and transmitted to the communication apparatus (mobile station) of the present embodiment via an antenna, which is not shown in the figure.

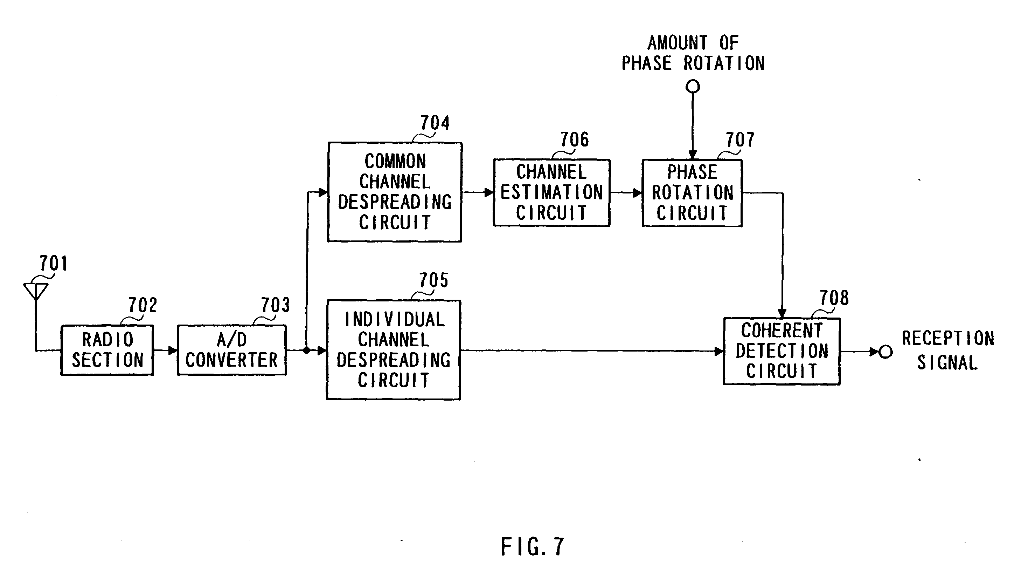

Then, the configuration of the communication apparatus (mobile station) according to Embodiment 4 is explained using FIG.7. FIG.7 is a block diagram showing a configuration of the communication apparatus (mobile station) according to Embodiment 4.

A signal sent by the communication apparatus (base station) according to Embodiment 4 is received by antenna 701 and sent to radio section 702.

In radio section 702, the signal received by antenna 701 is subjected to amplification, frequency conversion and quasi-coherent detection and sent to A/D converter 703.

In A/D converter 703, the signal sent from radio section 702 is converted to a digital signal and sent to common channel despreading circuit 704 and individual channel despreading circuit 705.

In common channel despreading circuit 704, the signal sent from A/D converter 703 is despread using a common channel spreading code and the control signal including the pilot signal is thereby extracted, and this control signal is sent to channel estimation circuit 706. Furthermore, from this control signal, information indicating the amount of phase rotation of the user is extracted and sent to phase rotation circuit 707 via another path, which is not shown in the figure.

In channel estimation circuit 706, the control signal sent from common channel despreading circuit 704 is subjected to channel estimation with reference to the pilot signal contained in this control signal. This channel estimated value is sent to phase rotation circuit 707.

In phase rotation circuit 707, the channel estimated value sent from channel estimation circuit 706 is rotated by the amount of phase rotation notified by the communication apparatus (base station). This phase-rotated channel estimated value is sent to coherent detection circuit 708.

On the other hand, in individual channel despreading circuit 705, the signal sent from A/D converter 703 is despread using an individual channel spreading code and the user signal is thereby extracted and this user signal is sent to coherent detection circuit 708.

In coherent detection circuit 708, the user signal sent from individual channel despreading circuit 705 is corrected with the channel estimated value after phase rotation sent from phase rotation circuit 707 and then subjected to coherent detection. Hereafter, the signal is subjected to the above described processing.

Then, the operations of the components of the communication apparatus (mobile station) shown in FIG.7 are explained.

The communication apparatus (mobile station) according to the present embodiment receives a signal transmitted by the communication apparatus (base station) according to the present embodiment via antenna 701.

Radio section 702 performs amplification, frequency conversion and quasi-coherent detection on the signal received from antenna 101 and sends the signal to A/D converter 703.

A/D converter 703 converts the signal sent from radio section 702 to a digital signal and sends the converted signal to common channel despreading circuit 704 and individual channel despreading circuit 705.

Common channel despreading circuit 704 extracts the control signal by despreading the signal sent from A/D converter 703 using a common channel spreading code and sends this control signal to channel estimation circuit 706 and extracts the phase rotation amount information included in this control signal and sends this information to phase rotation circuit 706 via another path, which is not shown in the figure.

Channel estimation circuit 706 performs channel estimation with reference to a pilot signal included in the control signal sent from common channel despreading circuit 704 and sends the channel estimated value to phase rotation circuit 707.

Phase rotation circuit 707 rotates the phase of the channel estimated value sent from channel estimation circuit 706 by the amount of phase rotation sent from common channel despreading circuit 704 and sends the result to coherent detection circuit 708.

Individual channel despreading circuit 705 extracts the user signal by despreading the signal sent from radio section 702 using an individual channel spreading code and sends this user signal to coherent detection circuit 708.

Coherent detection circuit 708 performs phase correction on the user signal sent from individual channel despreading circuit 705 using the channel estimated value after phase rotation sent from phase rotation circuit 707 and then performs coherent detection.

As shown above, according to the present embodiment, even when transmission data and a pilot signal are transmitted through different channels, the transmission amplifier provided in radio section 115 can suppress the dynamic range during an amplification operation by rotating the phase at the location of each signal point after phase modulation of the control signal to send the transmission data and pilot signals of a plurality of users, thus making it also possible to suppress heat generated at this time. Therefore, as the transmission amplifier, a lower cost and smaller amplifier than that for the conventional communication apparatus can be used.

Furthermore, according to the present embodiment, the transmitting side notifies each user of the amount of phase rotation, and therefore the receiving side can know the phase difference between the user signal and pilot signal about the location of the signal point. Therefore, the receiving side can correctly perform coherent detection on the user signal sent from the transmitting side.

The embodiment above describes the case where for coherent detection of the user signal sent through an individual channel, the user signal sent through the individual channel is corrected with a channel estimated value which has been phase-rotated by the amount of phase rotation notified from the transmitting side and subjected to coherent detection. However, the present invention is not limited to this; it is also possible to rotate the phase of the user signal sent through the individual channel by the amount of phase rotation notified from the transmitting side, correct with a channel estimated value and subject to coherent detection.

(Embodiment 5)

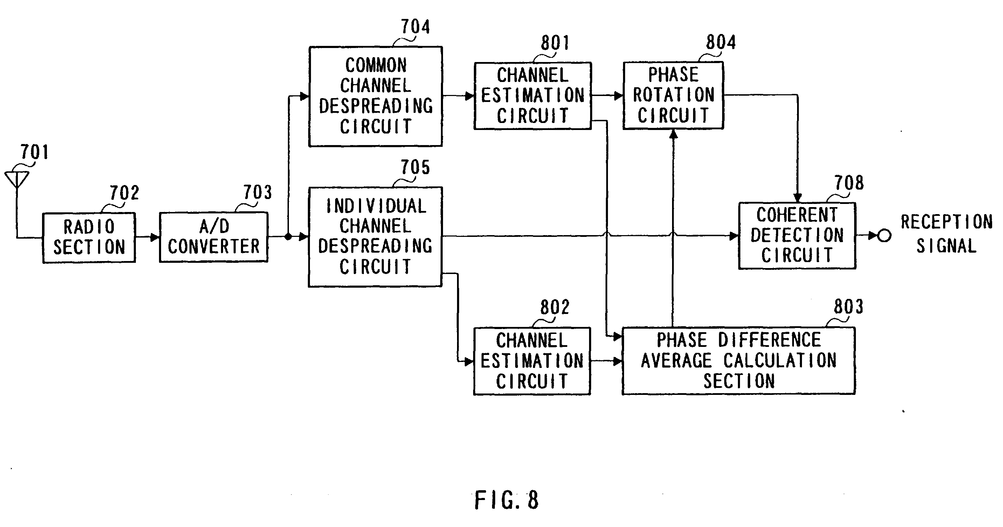

Embodiment 5 is obtained by modifying the Embodiment 4 in such a manner that the transmitting side does not notify each user of the amount of phase rotation and the receiving side estimates the amount of phase rotation. FIG.8 is a block diagram showing a configuration of the communication apparatus (mobile station) according to Embodiment 4. The parts in the configuration of Embodiment 5, which are the same as those in FIG.7, are assigned the same codes and their detailed explanations are omitted.

A control signal sent from common channel despreading circuit 704 is subjected to channel estimation for every slot with reference to a pilot signal included in this control signal. This channel estimated value for every slot is sent to phase rotation circuit 804 and phase difference average calculation section 803. The information on the pilot symbol above is sent to channel estimation circuit 802 via a path, which is not shown in the figure.

On the other hand, a user signal sent from individual channel despreading circuit 705 is sent to coherent detection circuit 708 and channel estimation circuit 802.

In channel estimation circuit 802, the user signal sent from individual channel despreading circuit 705 is subjected to channel estimation for every slot with reference to information on the pilot signal sent from channel estimation circuit 801. This channel estimated value for every slot is sent to phase difference average calculation section 803.

Phase difference average calculation section 803 calculates a phase difference between the channel estimated value of the control signal sent from channel estimation circuit 801 and the channel estimated value of the user signal sent from channel estimation circuit 802 in the current slot first. Then, an average phase difference in all slots, that is, from the slot at the start of communication to the current slot, is calculated. This allows a correct phase difference to be calculated. This average phase difference is sent to phase rotation circuit 804.

Phase rotation circuit 804 rotates the phase of the channel estimated value of the control signal sent from channel estimation circuit 801 by the average phase difference sent from phase difference average calculation section 803. The channel estimated value of the control signal after this phase rotation is sent to coherent detection circuit 708.

In coherent detection circuit 708, the user signal sent from individual channel despreading circuit 705 is corrected with the channel estimated value of the control signal after phase rotation sent from phase rotation circuit 804 and then subjected to coherent detection.

As shown above, according to the present embodiment, on the receiving side, phase difference average calculation circuit 803 calculates the difference between a channel estimated value of the control signal including a pilot signal and channel estimated value of the user signal for every slot, then calculates this average phase difference in all slots and phase rotation circuit 804 rotates the phase of the channel estimated value of the control signal according to the calculated average phase difference, which allows coherent detection circuit 708 to correctly perform coherent detection of the user signal. Therefore, even if not notified of the amount of phase rotation by the transmitting side, the receiving side can perform correct coherent detection of the user signal by estimating the amount of phase rotation.

The communication apparatus according to the embodiments above can be installed in a base station apparatus and communication terminal apparatus carrying out mobile communications.

This application is based on the Japanese Patent Application No.HEI 10-244163 filed on August 28, 1998 and the Japanese Patent Application No.HEI 10-324112 filed on November 13, 1998, entire content of which is expressly incorporated by reference herein.

Industrial Applicability

The present invention is ideally applicable to a field of communication apparatuses that transmit user signals to a plurality of users.

**Claims**

1. A communication apparatus comprising:

   modulator for phase-modulating signals transmitted to a plurality of communication destinations;
   phase rotator for rotating the phase of each modulated signal by an amount of rotation which differs from one communication destination to another among the plurality of communication destinations; and
   combiner for combining the signals subjected to phase rotation.

2. The communication apparatus according to claim 1, wherein the signals transmitted to the plurality of communication destinations include a plurality of individual channel signals with known reference signal inserted into data.

3. The communication apparatus according to claim 1, wherein the signals transmitted to the plurality of communication destinations include a common control channel signal including known reference signal and a plurality of an individual channel signal.

4. The communication apparatus according to claim 3, further comprising phase rotation amount notifier for notifying the plurality of communication destinations of respective amount of phase rotation.

5. The communication apparatus according to claim 2, wherein said phase rotator calculates a phase rotation angle based on the total number of channel signals and rotates the phases of respective channel signals by the calculated phase rotation angle.

6. The communication apparatus according to claim 5, wherein said phase rotator calculates a basic angle by dividing the phase difference at the location of the signal point of the modulated signal by the total number of channel signals and regards the value obtained by multiplying the basic angle by the channel signal number as the phase rotation angle.

7. The communication apparatus according to claim 2, wherein said phase rotator stores a pre-calculated phase rotation angle and rotates the signal by the calculated phase rotation angle.

8. The communication apparatus according to claim 7, wherein said phase rotator calculates a basic angle by dividing the phase difference at the location of the signal point of the modulated signal by a constant and regards the value obtained by multiplying the basic angle by a value obtained by performing modulo calculation on the channel signal number with the constant as the phase rotation angle.

9. The communication apparatus according to claim 7, wherein said phase rotator calculates a basic angle by dividing the phase difference at the location of the signal point of the modulated signal by a constant, generates random numbers using the channel signal number as a key and regards the value obtained by multiplying a value obtained by performing modulo calculation on the random numbers with the constant by the basic angle as the phase rotation angle.

10. The communication apparatus according to claim 7, further comprising rotation angle assigner for calculating the phase rotation angle of a new channel signal based on a combined signal of the previous slot when a channel signal is newly generated and outputting the calculation result to the phase rotator.

11. The communication apparatus according to claim 10, wherein said rotation angle assigner sets an integer multiple of a constant as a candidate phase rotation angle, successively calculates maximum power by adding a modulated signal at each candidate phase rotation angle to the combined signal in the previous slot and regards the candidate phase rotation angle which minimizes the calculated maximum power as the phase rotation angle of the new user.

12. A communication apparatus comprising:

receiver for receiving a common control channel signal and individual channel signal which have been subjected to phase modulation and whose phase has been rotated by a predetermined amount of phase rotation; and
phase rotator for rotating the phase of the common control channel signal based on the amount of phase rotation about the common control channel signal notified by communication destination which transmitted the common control channel signal.

13. The communication apparatus according to claim 12, wherein said phase rotator comprises phase rotation amount estimator for estimating the amount of phase rotation from a phase difference between the common control channel signal and the individual channel signal and rotates the phase of the common control channel signal based on the estimated amount of phase rotation.

14. The communication apparatus according to claim 13, wherein said phase rotation amount estimator estimates the amount of phase rotation from an average of the phase differences corresponding to a plurality of slots.

15. A base station apparatus which comprises a communication apparatus and transmits a plurality of channel signals to a plurality of communication destinations simultaneously, said communication apparatus comprising:

modulator for phase-modulating signals transmitted to a plurality of communication destinations;
phase rotator for rotating the phase of each modulated signal by an amount of rotation that differs from one communication destination to another among the plurality of communication destinations; and
combiner for combining the signals subjected to phase rotation.

16. A radio communication terminal apparatus which comprises a communication apparatus and carries out a radio communication with the base station apparatus according to claim 15, said communication apparatus comprising:

receiver for receiving a common control channel signal and individual channel signal which have been subjected to phase modulation and whose phase has been rotated by a predetermined amount of phase rotation; and
phase rotator for rotating the phase of the common control channel signal based on the amount of phase rotation about the common control channel signal notified by communication destination which transmitted the common control channel signal.

**17.** A radio communication system which carries out a radio communication using the base station apparatus according to claim 15 and the radio communication terminal apparatus according to claim 16.

**18.** A peak power suppression method comprising the steps of:

performing phase modulation on signals transmitted to a plurality of communication destinations;
rotating phases of the phase-modulated signal by an amount of rotation which differs from one communication destination to another among the plurality of communication destinations; and
combining the phase-rotated signals.

**19.** The peak power suppression method according to claim 18, wherein the signals transmitted to the plurality of communication destinations include a plurality of individual channel signals with known reference signal inserted into data.

**20.** The peak power suppression method according to claim 18, wherein the signals transmitted to the plurality of communication destinations include a common control channel signal including known reference signal and a plurality of an individual channel signal.

**21.** The peak power suppression method according to claim 20, wherein the plurality of communication destinations are notified of respective amount of phase rotation.

**22.** The peak power suppression method according to claim 19, further comprising the steps of:

calculating a phase rotation angle based on the total number of channel signals; and
rotating the phases of respective channel signals by the calculated phase rotation angle.

**23.** The peak power suppression method according to claim 22, further comprising the steps of:

calculating a basic angle by dividing the phase difference at the location of the signal point of the modulated signal by the total number of channel signals; and
regarding the value obtained by multiplying the basic angle by the channel signal number as the phase rotation angle.

**24.** The peak power suppression method according to claim 19, further comprising the steps of:

storing a pre-calculated phase rotation angle; and
rotating the signal by the calculated phase rotation angle.

**25.** The peak power suppression method according to claim 24, further comprising the steps of:

calculating a basic angle by dividing the phase difference at the location of the signal point of the modulated signal by a constant; and
regarding the value obtained by multiplying the basic angle by a value obtained by performing modulo calculation on the channel signal number with the constant as the phase rotation angle.

**26.** The peak power suppression method according to claim 24, further comprising the steps of:

calculating a basic angle by dividing the phase difference at the location of the signal point of the modulated signal by a constant, generates random numbers using the channel signal number as a key; and
regarding the value obtained by multiplying a value obtained by performing modulo calculation on the random numbers with said constant by the basic angle as the phase rotation angle.

**27.** The peak power suppression method according to claim 24, further comprising the step of calculating the phase rotation angle of a new channel signal based on a combined signal of the previous slot when a channel signal is newly generated.

**28.** The peak power suppression method according to claim 27, further comprising the steps of:

setting an integer multiple of a constant as a candidate phase rotation angle,
successively calculating maximum power by adding a modulated signal at each candidate phase rotation angle to the combined signal in the previous slot; and
regarding the candidate phase rotation angle which minimizes the calculated maximum power as the phase rotation angle of the new user.

**29.** A communication method comprising the steps of:

receiving a common control channel signal and individual channel signal which have been subjected to phase modulation and whose phase has been rotated by a predetermined amount of phase rotation; and
rotating the phase of the common control channel signal based on the amount of phase rotation about the common control channel signal notified by communication destination which transmitted the common control channel signal.

**30.** The communication method according to claim 29, further comprising the steps of:

estimating the amount of phase rotation from a phase difference between the common control channel signal and the individual channel signal; and
rotating the phase of the common control channel signal based on the estimated amount of phase rotation.

**31.** The communication method according to claim 30, further comprising the step of estimating the amount of phase rotation from an average of the phase differences corresponding to a plurality of slots.

FIG. 1

FIG. 2

EP 1 028 553 A1

USER #2 — FIG. 3B

USER #4 — FIG. 3D

USER #1 — FIG. 3A

USER #3 — FIG. 3C

FIG. 4

FIG. 5

USER #1 TRANSMISSION SIGNAL → 101 MODULATION CIRCUIT → 105 PHASE ROTATION CIRCUIT

USER #2 TRANSMISSION SIGNAL → 102 MODULATION CIRCUIT → 106 PHASE ROTATION CIRCUIT

USER #3 TRANSMISSION SIGNAL → 103 MODULATION CIRCUIT → 107 PHASE ROTATION CIRCUIT

USER #4 TRANSMISSION SIGNAL → 104 MODULATION CIRCUIT → 501 SW → 108 PHASE ROTATION CIRCUIT

502 PHASE ROTATION AMOUNT ASSIGNMENT CIRCUIT

109 ADDITION CIRCUIT I → 111 BAND RESTRICTION FILTER → 113 D/A CONVERTER

110 ADDITION CIRCUIT Q → 112 BAND RESTRICTION FILTER → 114 D/A CONVERTER

115 RADIO SECTION

FIG. 6

USER #1 TRANSMISSION SIGNAL — 101 MODULATION CIRCUIT — 105 PHASE ROTATION CIRCUIT

USER #2 TRANSMISSION SIGNAL — 102 MODULATION CIRCUIT — 106 PHASE ROTATION CIRCUIT

USER #3 TRANSMISSION SIGNAL — 103 MODULATION CIRCUIT — 107 PHASE ROTATION CIRCUIT

CONTROL SIGNAL — 104 MODULATION CIRCUIT — 108 PHASE ROTATION CIRCUIT

109 ADDITION CIRCUIT I — 111 BAND RESTRICTION FILTER — 113 D/A CONVERTER

110 ADDITION CIRCUIT Q — 112 BAND RESTRICTION FILTER — 114 D/A CONVERTER

115 RADIO SECTION

EP 1 028 553 A1

AMOUNT OF
PHASE ROTATION

704

COMMON
CHANNEL
DESPREADING
CIRCUIT

706

CHANNEL
ESTIMATION
CIRCUIT

707

PHASE
ROTATION
CIRCUIT

701

702

RADIO
SECTION

703

A/D
CONVERTER

705

INDIVIDUAL
CHANNEL
DESPREADING
CIRCUIT

708

COHERENT
DETECTION
CIRCUIT

RECEPTION
SIGNAL

FIG. 7

FIG. 8

FIG. 9

EP 1 028 553 A1

# INTERNATIONAL SEARCH REPORT

| International application No. |
|---|
| PCT/JP99/04465 |

**A. CLASSIFICATION OF SUBJECT MATTER**
Int. Cl⁶ H04J13/04

According to International Patent Classification (IPC) or to both national classification and IPC

**B. FIELDS SEARCHED**

Minimum documentation searched (classification system followed by classification symbols)
Int. Cl⁶ H04J13/00-13/06
Int. Cl⁶ H04J1/00-1/20
Int. Cl⁶ H04J11/00

Documentation searched other than minimum documentation to the extent that such documents are included in the fields searched
Jitsuyo Shinan Koho    1926-1999
Kokai Jitsuyo Shinan Koho    1971-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| EX | JP, 10-336151, A (Mitsubishi Electric Corporation), 18 December, 1998 (18.12.98), Page 6, left column, lines 2 to 37; Fig. 7 (Family: none) | 1,2,5,7,15, 18,19,22,24 |
| EA | | 3,4,6,8-14, 16,17,20,21, 23,25-31 |
| Y | JP, 9-298495, A (NTT Ido Tsushinmo K.K.), 18 November, 1997 (18.11.97), Page 4, left column, line 35 to right column, line 21; Fig. 1 (Family: none) | 1,2,5,6,7, 15,18,19,24 |
| A | | 3,4,8-14,16,17 20-23,25-31 |
| Y | EP, 810753, A2 (Sony Corporation), 03 December, 1997 (03.12.97), Column 16, lines 22 to 55; Fig. 14 & JP, 9-321721, A(Sony Corporation), 12 December, 1997 (12.12.97), Page 9, left column, lines 13 to 42; Fig. 9 & KR, 97078070, A | 1,2,5,6,7, 15,18,19,24 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 November, 1999 (11.11.99) | 30 November, 1999 (30.11.99) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP99/04465

C (Continuation). DOCUMENTS CONSIDERED TO BE RELEVANT

| Category* | Citation of document, with indication, where appropriate, of the relevant passages | Relevant to claim No. |
|---|---|---|
| A | | 3,4,8-14,16,17 20-23,25-31 |
| Y | JP, 5-130191, A (Noppon Motoroola K.K.), 25 May, 1993 (25.05.93), Page 4, left column, lines 32 to 36; page 4, left column, line 49 to right column, line 1; page 4, right column, lines 17 to 19; page 4, right column, lines 39 to 41; Fig. 8  (Family: none) | 1,2,5,6,7, 15,18,19,24 |
| A | | 3,4,8-14,16,17 20-23,25-31 |
| A | EP, 594352, A2 (American Telephone & Telegraph Company), 13 October, 1993 (13.10.93), Column 3, lines 34 to 48; Fig. 1 & JP, 6-204773, A (American Telephone & Telegram Company), 22 July, 1994 (22.07.94), Page 3, right column, lines 31 to 43; Fig. 1 & US, 5300894, A    & DE, 69317201, E &ES, 2114008, T3    & TW, 308756, A | 1-31 |
| A | JP, 61-176221, A (Nippon Telephone & Telegraph Corp.), 07 August, 1986 (07.08.86), Page 2, upper right column, lines 4 to 12; Fig. 1 (Family: none) | 1-31 |

Form PCT/ISA/210 (continuation of second sheet) (July 1992)